# EUROPEAN PATENT APPLICATION

(11) **EP 2 017 744 A1**
(43) Date of publication of application: **21.01.2009**
(21) Application number: 08168785.7
(22) Date of filing: 31.01.2003
(51) Int. Cl.: G06F 17/21, G06F 3/12

(54) **Document processing apparatus and method**

(30) Priority: 01.02.2002 JP 2002025961; 17.01.2003 JP 2003009684
(62) Divisional of application: 03250611.5
(71) Applicant: Canon Kabushiki Kaisha, Tokyo 146-8501 (JP)
(72) Inventor: NISHIKAWA, Satoshi, Ohta-ku Tokyo (JP); KIZAKI, Junichiro, Ohta-ku Tokyo (JP)
(74) Representative: Hitching, Peter Matthew

(57) **Abstract**

The object of this invention is to automatically determine by a printing system on the basis of print settings and the like whether to output all records by a single print job or respective records by independent print jobs in variable printing. For this purpose, in the printing system according to this invention, saved print settings are loaded (S501), and of these print settings, the value of a predetermined setting item which requires variable job division is determined (S503). This item is preferably an item indicating that a sheet is to be fed from an inserter. If the item which requires variable job division is determined to be set, a despool table is so set as to generate independent print jobs for respective records (S504). If job division is necessary for respective records in accordance with print settings, independent print jobs are generated for the respective records.

## Description

The present invention relates to a document processing apparatus and method which provide a printing function of combining output data generated by various programs such as a document processing program and image editing program into one document and printing the document.

Different types of data such as characters, tables, and images require different structures which define the data and different editing operations for the data. Various application programs are provided in accordance with the type of data. The user uses different applications for different types of data: a character processing program in order to edit characters, a spreadsheet program in order to edit tables, and an image editing program in order to edit images. There is also provided a document processing system for creating and editing a new document obtained by combining data created by different application programs used by the user.

A document created in this way contains document data which is created by an application program capable of variable printing and contains variable printing designation. Variable printing is a printing function applied to a case wherein the contents of a given text, image, or the like are printed by a plurality of copies with different destinations. More specifically, a content to be changed is created and saved as a record of a given format in advance in correspondence with one record every print copy so as to embed the content in a variable field. A file (database or the like) for saving a content to be changed will be called variable data, and a series of printing units for embedding variable data will be called a record. For example, to out put printouts with different destinations, e.g., five destinations, five records are printed. In general, a record can be considered as one copy of a print material. However, the output pages corresponding to the respective records have different contents in the variable fields, the print results are not the same, and thus the expression "a copy" and "copies" are avoided. A content which is not to be changed and is not contained in a variable field is created in a printout format. The data format of one record is also defined in the content. Data which is not changed in variable printing will be called constant data (to be also referred to as form data), and a portion of constant data that is designated to embed variable data will be called a variable field.

In variable printing, if a print instruction is received, each variable data is inserted in a variable field contained in constant data, completing print data. A job control language is added to the print data to generate a print job. The print job is issued to a printing apparatus where the data is printed out.

The variable printing function replaces a designated content with a record content by using an existing database or the like. This can reduce the resource of the document processing system and the labor of the user.

When a document contains variable printing designation, a variable field is filled with variable data to create a print job in printing. A print job is created by the first method of creating a print job for all data or the second method of creating, as a print j ob every record, print data of one record completed by inserting variable data in each variable field. The secondmethod is also called variable job division. The user can designate which of the methods is to be adopted.

However, user's designation does not always employ an optimum method.

In the first method, one print job is created for all data. It is easy to manage a print job on a user interface or to record a print job in the log and manage the job. The processing overhead is low in generating and outputting a job. However, processing executed every job, e.g., processing such as stapling or cover insertion provided every j ob in a printing apparatus cannot be performed every record. For example, a cover cannot be inserted every record, or a print material cannot be stapled every record.

In the second method, one print job is created every record, and processing executed every job can be performed every record. However, the number of generated print jobs is at least equal to or larger than the number of records. The processing overhead is high, and it is difficult to manage a print job.

The first and secondmethods have contradictory merits and demerits. If an inadequate method is selected, a user-desired printout cannot be obtained. The user must determine either method in accordance with the print contents. Particularly when a user who created data and a user who is to output data are different, a job creation method must be determined after a print test. This not only increases the labor of the user but also wastes resources.

The present invention has been made in consideration of the above situation, and has as its object to provide a document processing apparatus and method which may reliably output a user-desired printout by creating a print job by an optimum method based on print settings, reduce the labor of the user, prevent the waste of resources, and shorten the processing time.

To address the above object, the present invention has the following arrangement.

A document processing apparatus capable of issuing to a printing apparatus a print job of variable printing of printing document data in which designated variable data is embedded in a designated region comprises
setting means for setting print attributes for the document data,
determination means for, when variable printing is to be performed for a plurality of records, determining on the basis of the print attributes set by the setting means whether to issue a plurality of print jobs for the plurality of records or a single print ob for the plurality of records, and
issuing means for issuing a plurality of print jobs or a single print job on the basis of determination.

When, of the print attributes, a print setting which is effective for the whole document data and should be separately applied to the plurality of records is selected, the determination means preferably determines to issue a plurality of independent print jobs for the plurality of records.

When bookbinding setting and saddle stitch are selected as print settings, when stapling is selected, when index sheet insertion is selected and the number of sheets to be inserted exceeds an upper limit processible by the printing apparatus, or when cover insertion is selected, the determination means preferably determines to issue a plurality of print jobs for the plurality of records.

It is preferable that when stapling of each record is selected as a print setting, the determination means determine whether the number of records exceeds a ob binding limit count processible by the printing apparatus, when the number of records exceeds the job binding count, determine to issue a plurality of print jobs, and when the number of records does not exceed the job binding count, determine to issue a single print job for the plurality of records by using a job binding function.

Other features and advantages of the present invention will be apparent from the following description of embodiments of the invention which are described by way of example only in conjunction with the accompanying drawings, in which like reference characters designate the same or similar parts throughout the figures thereof, and in which:
Fig. 1 is a block diagram showing a stand-alone document processing system;
Fig. 2 is a block diagram showing a computer and printer which implement the document processing system;
Figs. 3A and 3B are views showing an example of a book file structure;
Figs. 4A and 4B are tables showing a list of book attributes;
Fig. 5 is a table showing a list of chapter attributes;
Fig. 6 is a table showing a list of page attributes;
Fig. 7 is a flow chart showing procedures of opening a book file;
Fig. 8 is a flow chart showing procedures of importing an electronic original file into a book file;
Fig. 9 is a flow chart showing procedures of converting application data into an electronic original file;
Fig. 10 is a view showing an example of a user interface window when an existing book file is opened;
Fig. 11 is a view showing an example of a user interface window when a new book file is opened;
Fig. 12 is a block diagram showing a client-server document processing system;
Fig. 13 is a sectional view showing the printer;
Fig. 14 is a flow chart showing an example of despool table write processing by a bookbinding application 104;
Fig. 15 is a flow chart showing a detailed example of despool table write processing by the bookbinding application 104;
Fig. 16 is a flow chart showing the example of despool table write processing by the bookbinding application 104;
Fig. 17 is a flow chart showing an example of despool processing by a despooler 105;
Fig. 18 is a view showing an example of a book attribute setting user interface window by the bookbinding application 104;
Fig. 19 is a view showing the outline of a despool table;
Fig. 20 is a view showing the outline of a despool table;
Fig. 21 is a view showing the outline of a despool table;
Fig. 22 is a flow chart showing an example of despool table write processing by the bookbinding application 104 according to another embodiment; and
Fig. 23 is a view showing an example of a user interface window in printing by the bookbinding application 104.

The accompanying drawings, which are incorporated in and constitute a part of the specification, illustrate embodiments of the invention and, together with the description, serve to explain the principles of the embodiment of the invention.

### [First Embodiment]

### <General Description of System>

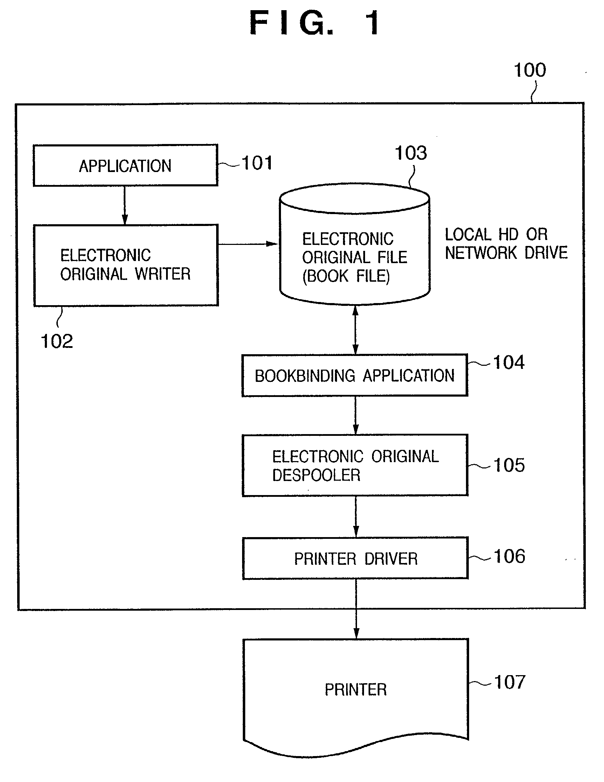

A document processing system which embodies the present invention will be generally described with reference to Figs. 1 to 12. This document processing system converts a data file created by a general application into an electronic original file by an electronic original writer. A bookbinding application provides a function of editing the electronic original file. Details of the system will be explained below.

### <System Configuration and Operation>

Fig. 1 is a block diagram showing the software architecture of the document processing system according to the first embodiment. The document processing system is implemented by a digital computer 100 (to be also referred to as a host computer hereinafter) as an embodiment suited to the document processing apparatus (information processing apparatus) of the present invention. A general application 101 is an application program which provides functions such as wordprocessing, spreadsheet, photo-retouch, draw, paint, presentation, and text editing. The general application 101 has a printing function corresponding to the OS. Such applications utilize a predetermined interface (generally called GDI) provided by the OS (Operating System) in printing application data such as created document data or image data. To print created data, the application 101 transmits an output command (called a GDI function) which is determined in advance for the output module of the OS providing the interface and has an OS-dependent format. The output module which has received the output command converts the command into a format processible by an output device such as a printer, and outputs the converted command (called a DDI function). Since the format processible by the output device changes depending on the type of device, the manufacturer, and the model, a device driver is provided for each device. The OS converts a command by using the device driver, generates print data, and combines print data by JL (Job Language) to generate a print job. When the OS is Microsoft Windows^{®}, the output module is a GDI module.

An electronic original writer 102 is an improvement of the above-mentioned device drivers, and is a software module provided to implement the document processing system. The electronic original writer 102 does not target a specific output device, and converts an output command into a format processible by a bookbinding application 104 or printer driver 106 (to be described later). The format (to be referred to as an electronic original format hereinafter) converted by the electronic original writer 102 is not particularly limited as far as each original page can be expressed by a detailed format. Of substantial standard formats, for example, the PDF format by Adobe Systems and the SVG format can be adopted as electronic original formats. When the application 101 utilizes the electronic original writer 102, the electronic original writer 102 is designated as a device driver used for output, and then caused to execute printing. An electronic original file created by the electronic original writer 102 does not have a complete electronic original file format. For this reason, the electronic original writer 102 is designated as a device driver by the bookbinding application 104, and executes conversion of application data into an electronic original file under the management of the bookbinding application 104. The bookbinding application 104 completes a new incomplete electronic original file generated by the electronic original writer 102 as an electronic original file having the following format. In case of necessity to definitely discriminate these files, a file created by the electronic original writer 102 will be called an electronic original file, and an electronic original file given a structure by the bookbinding application will be called a book file. If these files need not be particularly discriminated, a document file generated by an application, an electronic original file, and a book file are called document files (or document data).

As described above, the electronic original writer 102 is designated as a device driver, and the general application 101 prints the data. Application data is converted into an electronic original format in pages (to be referred to as logical pages or original pages hereinafter) defined by the application 101. The converted data is stored as an electronic original file 103 in a storage medium such as a hard disk. The hard disk may be the local drive of the computer which implements the document processing system of the first embodiment, or when the computer is connected to a network, may be a drive provided on the network.

The bookbinding application 104 provides the user with a function of loading and editing the electronic original file or book file 103. The bookbinding application 104 provides no function of editing the contents of each page, but a function of editing a chapter or book structure (to be described later) made up of pages as a minimum unit.

To print the book file 103 edited by the bookbinding application 104, the bookbinding application 104 activates an electronic original despooler 105. The electronic original despooler 105 is a program module installed into the computer together with the bookbinding application. The electronic original despooler 105 is a module used to output drawing data to a printer driver in printing a document (book file) used by the bookbinding application. The electronic original despooler 105 reads out a designated book file from the hard disk. To print each page in a format described in the book file, the electronic original despooler 105 generates an output command complying with the output module of the OS described above, and outputs the command to the output module (not shown). At this time, the printer driver 106 of a printer 107 used as an output device is designated as a device driver. The output module converts the output command received using the designated printer driver 106 of the printer 107 into a device command interpretable by the printer 107. The device command is transmitted to the printer 107, which prints an image corresponding to the command.

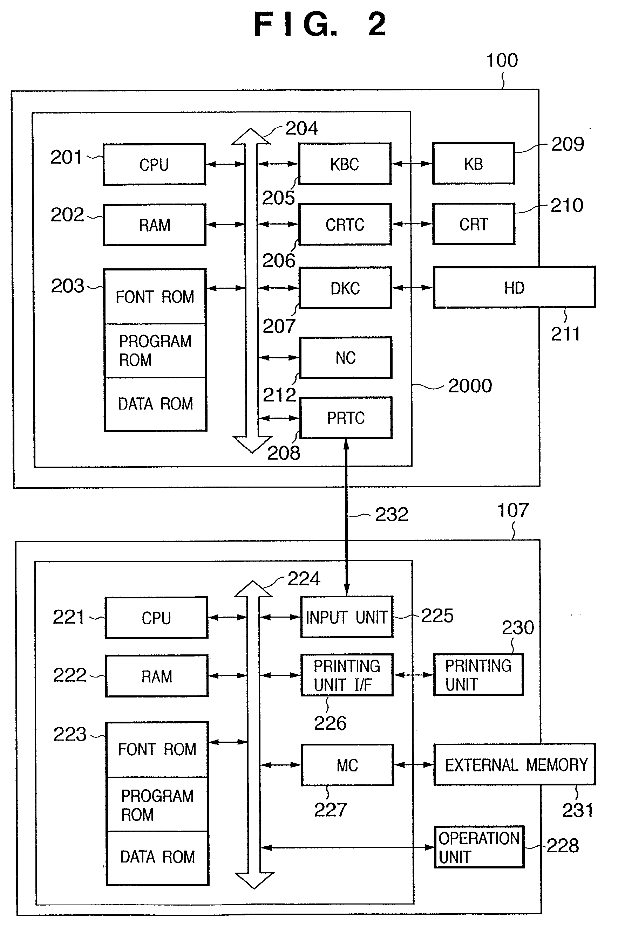

Fig. 2 is a block diagram showing the hardware of the computer 100 and printer 107. In Fig. 2, a CPU 201 executes a program such as an OS, general application, or bookbinding application which is stored in the program ROM of a ROM 203 or loaded from a hard disk 211 to a RAM 202, and realizes the software structure in Fig. 1 or flow chart procedures (to be described later) . The RAM 202 functions as the main memory or work area of the CPU 201. A keyboard controller (KBC) 205 controls a key input from a keyboard 209 or apointing device (not shown). A CRT controller (CRTC) 206 controls the display on a CRT display 210. A disk controller (DKC) 207 controls access to the hard disk (HD) 211 or floppy disk (FD) which stores a boot program, various applications, font data, user files, editing files (to be described later), and the like. A PRTC 208 controls signal exchange with the connected printer 107. An NC 212 is connected to a network, and executes communication control processing with another device connected to the network.

The printer 107 is controlled by a CPU 221. The printer CPU 221 outputs an image signal as output information to a printing unit (printer engine) 230 connected to a system bus 232 on the basis of a control program stored in the program ROM of a ROM 223 or a control program stored in an external memory 231. The program ROM of the ROM 223 stores, e.g., the control program of the CPU 221. The font ROM of the ROM 223 stores, e.g., font data used to generate the output information. The data ROM of the ROM 223 stores, e.g., information used on the host computer for a printer having no external memory 231 such as a hard disk.

The CPU 221 can communicate with the host computer via an input unit 225, and notify the host computer 100 of internal printer information and the like. A RAM 222 functions as the main memory or work area of the CPU 221, and the memory capacity can be expanded by an optional RAM connected to an expansion port (not shown). The RAM 222 is used as an output information mapping area, environment data storage area, NVRAM, and the like. Access to the above-described external memory 231 such as a hard disk (HD) or IC card is controlled by a memory controller (MC) 227. The external memory 231 is connected as an option, and stores font data, emulation programs, form data, and the like. An operation unit 228 has operation switches, an LED display, and the like.

The number of external memories 231 described above is not limited to one, and a plurality of external memories 231 may be arranged. A plurality of external memories which store an option card and a program for interpreting the printer control languages of different language systems in addition to built-in fonts may be connected. Further, an NVRAM (not shown) maybe adoptedto store printer mode setting information from the operation unit (operation panel) 228.

### <Electronic Original Data Format>

Before the bookbinding application 104 is described in detail, the book file data format will be explained. The book file has a three-layered structure similar to a paper-medium book. The upper layer is called a "book", resembles one book, and defines the attributes of the entire book. The intermediate layer corresponds to a chapter in the book, and is also called a "chapter". As for each chapter, its attributes can be defined. The lower layer is a "page", and corresponds to each page defined by an application program. As for each page, its attributes can be defined. One book may include a plurality of chapters, and one chapter may include a plurality of pages.

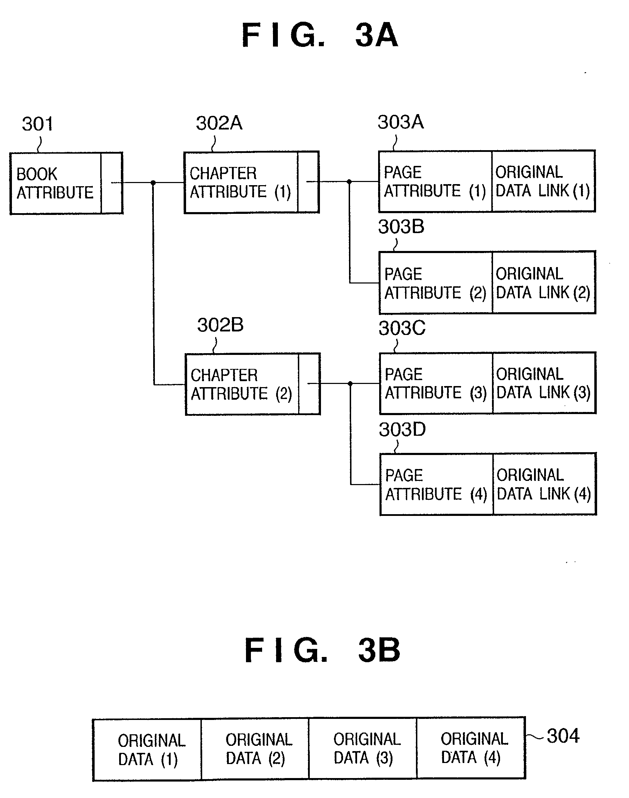

Fig. 3A is a block diagram schematically showing an example of the book file format. In the book file of this example, a book, chapter, and page are represented by corresponding nodes. One book file includes one book. The book and chapter are a concept for defining a book structure, and contain, as entities, defined attribute values and links to lower layers. The page has, as an entity, data of each page output from an application program. In addition to an attribute value, the page contains the entity of an original page (original page data) and a link to each original page data. In some cases, a print page to be output onto a paper medium or the like includes a plurality of original pages. This structure is displayed not by a link but by an attribute in the book, chapter, or page layer.

InFigs. 3A and 3B, a book 301 defines a book attribute, and is linked to two chapters 302A and 302B. These links display that the chapters 302A and 302B are included in the book 301. The chapter 302A is linked to pages 303A and 303B, which represents that the chapter 302A includes these pages. The pages 303A and 303B define attribute values, and contain links to original page data (1) and (2) serving as entities. These links represent data (1) and (2) of original page data 304 shown in Fig. 3B, and display that the entities of the pages 303A and 303B are original page data (1) and (2).

A variable field is defined in each original page data.

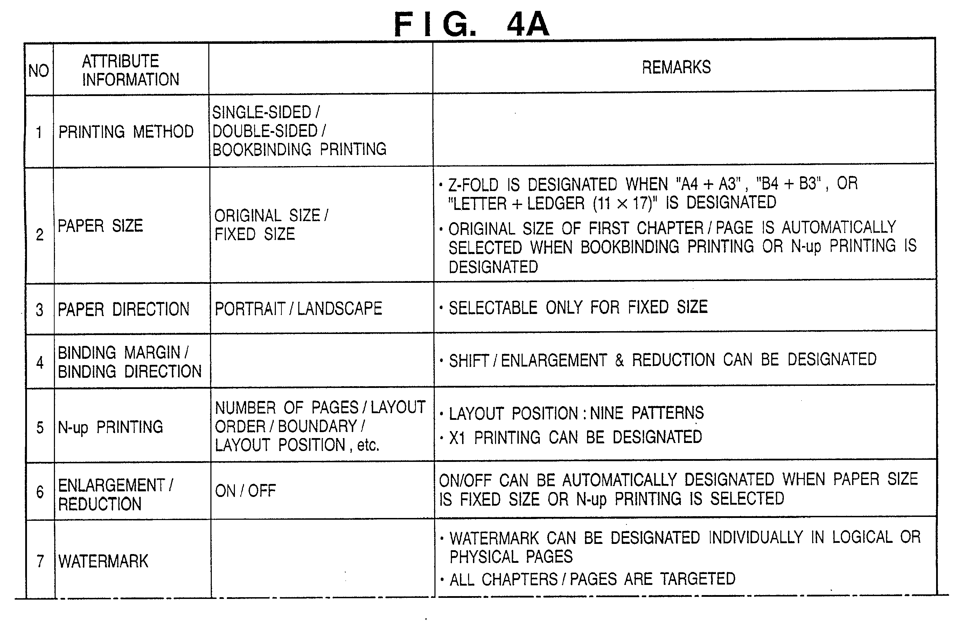

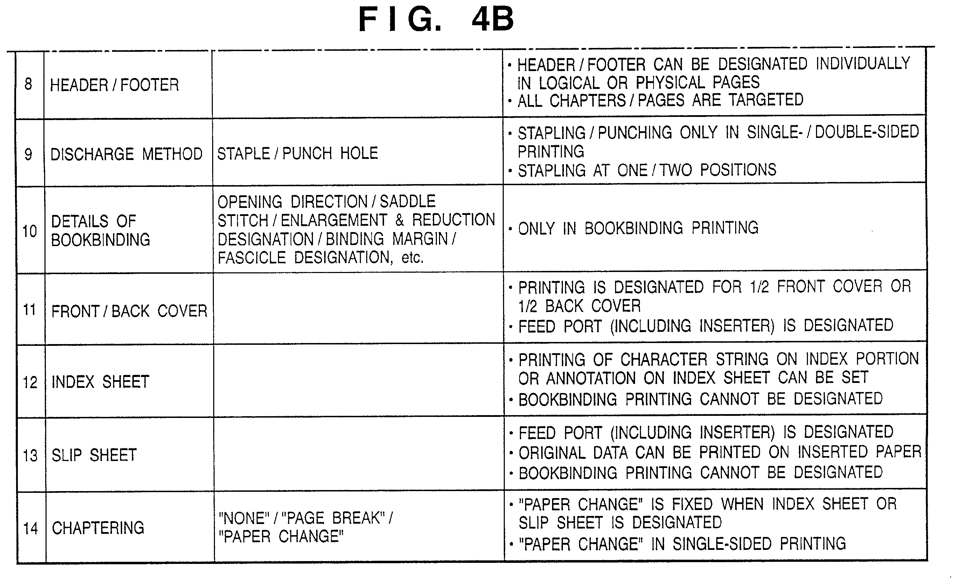

Figs. 4A and 4B show a list of book attributes. As for an item which can be defined repetitively on a lower layer, the attribute value of the lower layer is preferentially adopted. As for an item contained in only the book attribute, a value defined in the book attribute is effective over the book. An item repetitively defined on a lower layer is a default value used when this item is not defined in the lower layer. Each item shown in Figs. 4A and 4B does not correspond to one concrete item, but may contain a plurality of relevant items.

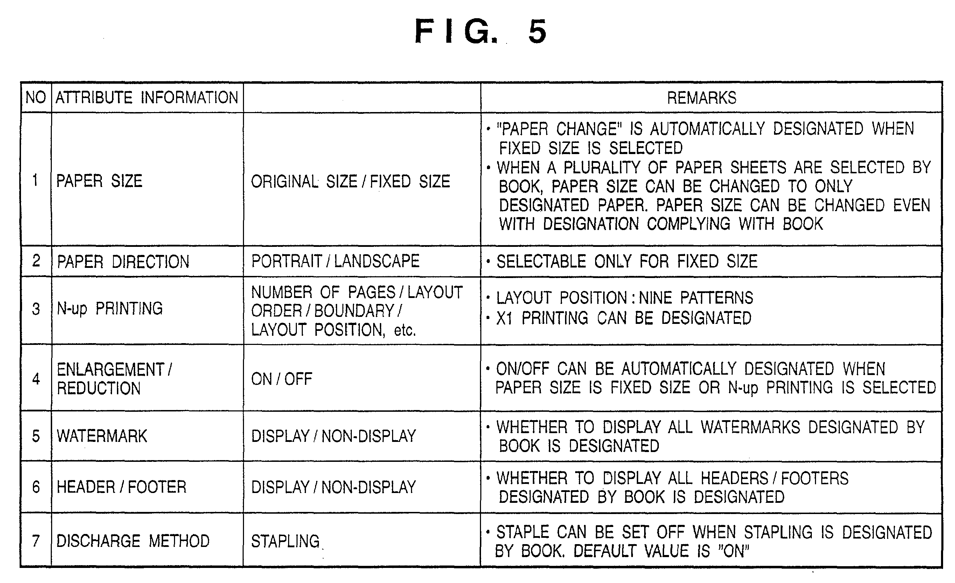

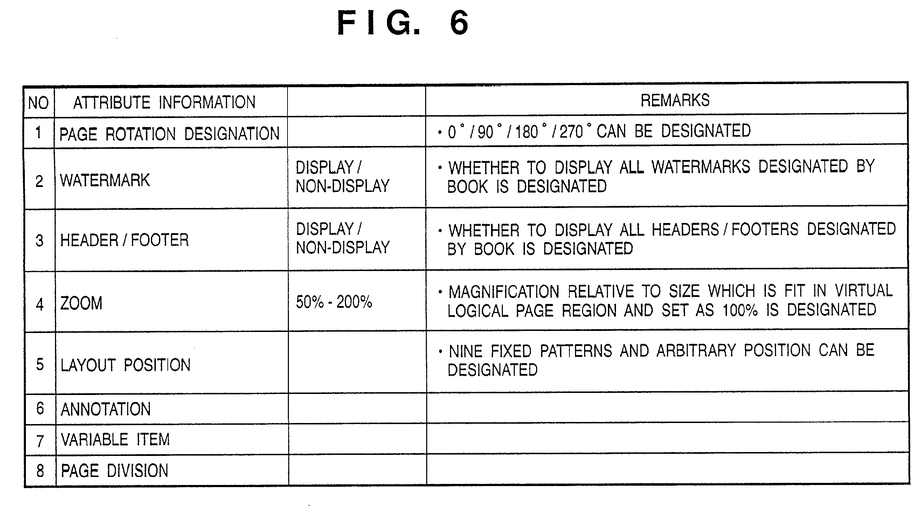

Fig. 5 shows a list of chapter attributes, and Fig. 6 shows a list of page attributes. The relationship between chapter attributes and page attributes is the same as that between book attributes and lower layer attributes.

Items unique to book attributes are six items : printing method, details of bookbinding, front/back cover, index sheet, slip sheet, and chaptering. These items are defined over the book. As printing method attributes, three values: single-sided printing, double-sided printing, and bookbinding printing can be designated. Bookbinding printing is a method of printing data in a format which allows bookbinding by bundling a separately designated number of paper sheets, folding the bundle into two, and binding the bundle. As detailed bookbinding attributes, the opening direction and the number of paper sheets to be bundled can be designated when bookbinding printing is designated.

The front/back cover attribute includes designation of adding paper sheets serving as front and back covers when an electronic original file combined as a book is printed, and designation of contents to be printed on the added paper sheets. The index sheet attribute includes designation of inserting a tabbed index sheet separately prepared in a printing apparatus for chaptering, and designation of contents to be printed on the index (tabbed) portion. This attribute becomes effective when a printing apparatus to be used is equipped with an inserter having an inserting function of inserting a paper sheet prepared separately from a print paper sheet into a desired position, or when a plurality of sheet cassettes can be used. This also applies to the slip sheet attribute.

The slip sheet attribute includes designation of inserting a paper sheet fed from an inserter or sheet feed cassette for chaptering, and designation of a sheet feed source when a slip sheet is inserted.

The chaptering attribute includes designation of whether to use a new paper sheet, use a new print page, or do nothing particular at a chapter break. In single-sided printing, the use of a new paper sheet and the use of a new print page are the same. In double-sided printing, a continuous chapter is not printed on one paper sheet if "the use of a new paper sheet" is designated, but may be printed on the obverse and reverse of one paper sheet if "the use of a new print page" is designated.

As for the chapter attribute, there is no item unique to the chapter, and all items overlap those of the book attribute. If the definition of the chapter attribute is different from that of the book attribute, a value defined by the chapter attribute precedes. Items common to only the book and chapter attributes are five items: paper size, paper direction, N-up printing designation, enlargement/reduction, and discharge method. The N-up printing designation attribute is an item for designating the number of original pages included in one print page. Layouts which can be designated are 1 x 1, 1 x 2, 2 x 2, 3 x 3, 4 x 4, and the like. The discharge method attribute is an item for designating whether to staple dischargedpaper sheets. The effectiveness of this attribute depends on whether the printing apparatus has a stapling function.

Items unique to the page attribute are a page rotation attribute, zoom, layout designation, annotation, and page division. The page rotation attribute is an item for designating the rotation angle when an original page is laid out on a print page. The zoom attribute is an item for designating the zoom ratio of an original page. The zoom ratio is designated based on a virtual logical page region size = 100%. The virtual logical page region is a region occupied by one original page when original pages are laid out in accordance with N-up designation or the like. For example, the virtual logical page region is a region corresponding to one print page for 1 x 1 layout, and a region obtained by reducing each side of one print page to about 70% for 1 x 2 layout.

Attributes common to the book, chapter, and page are a watermark attribute and header/footer attribute. The watermark is a separately designated image or character string printed over data created by an application. The header and footer are watermarks printed at the upper and lower margins of each page. For the header and footer, items such as a page number, and time and date which can be designated by variables are prepared. Contents which can be designated by the watermark attribute and header/footer attribute are common to the chapter and page, but are different in the book. The book can set the contents of the watermark and header/footer, and designate how to print a watermark or header/footer throughout the book. To the contrary, the chapter and page can designate whether to print a watermark or header/footer set by the book on the chapter or page.

### <Book File Generation Procedures>

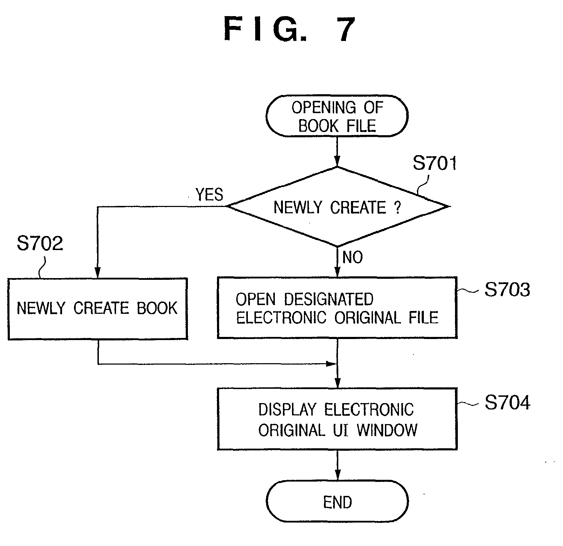

The book file has the above-described structure and contents. Procedures of creating a book file by the bookbinding application 104 and electronic original writer 102 will be explained. Creation of a book file is realized as part of book file editing operation by the bookbinding application 104. Fig. 7 shows procedures when the bookbinding application 104 opens a book file.

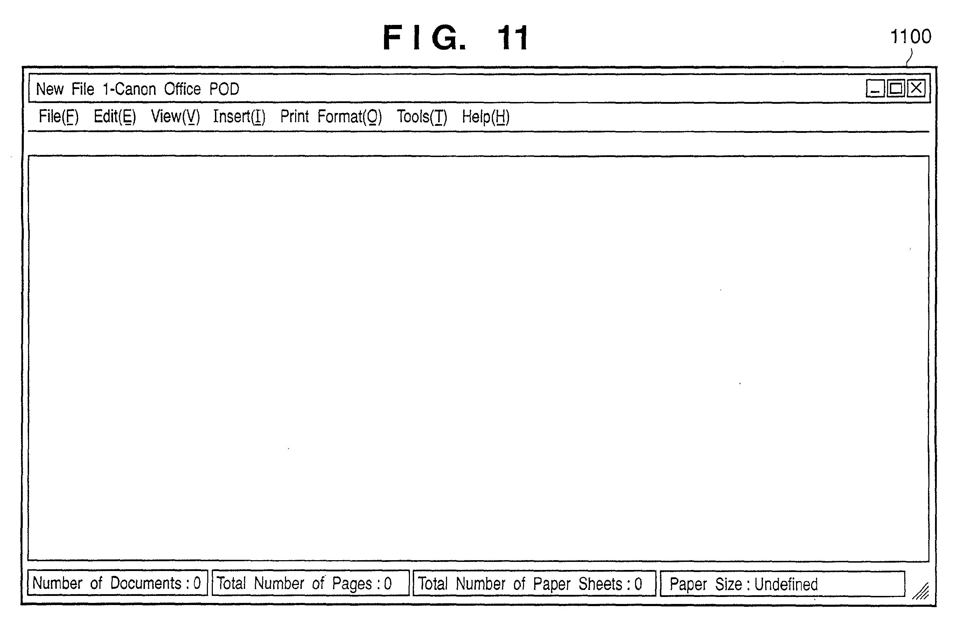

The bookbinding application 104 checks whether a book file to be opened is one to be newly created or an existing one (step S701). If YES in step S701, the bookbinding application 104 newly creates a book file including no chapter (step S702). In the example shown in Fig. 3A, the newly created book file is a book node which has only the book node 301 without any link to a chapter node. As the book attribute, a set of attributes prepared in advance for creation of a new book file are applied. The bookbinding application 104 then displays a UI (User Interface) window for editing the new book file (step S704). Fig. 11 shows an example of the UI window when a book file is newly created. In this case, a UI window 1100 does not display any information because the book file does not have any substantial content.

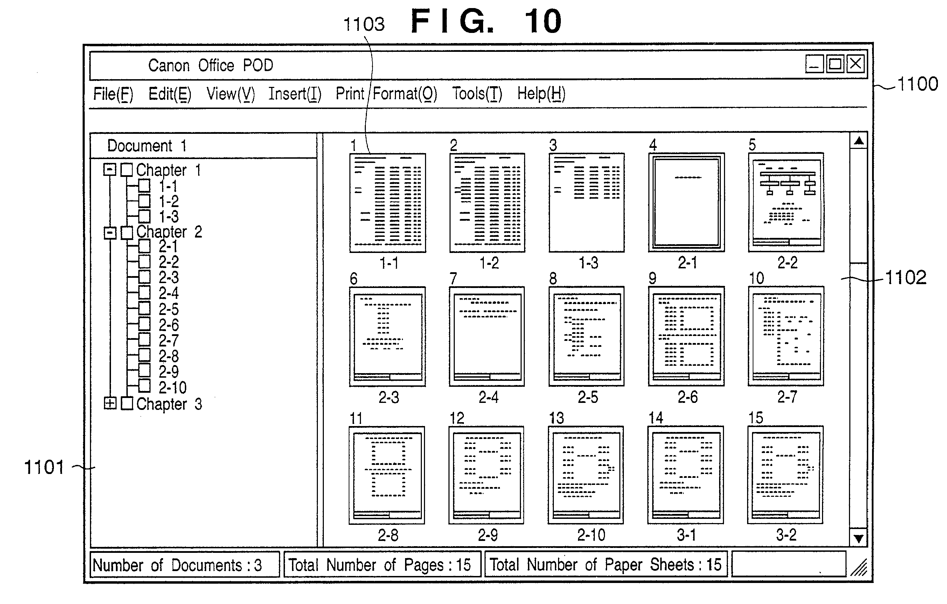

If NO in step S701, the bookbinding application 104 opens a designated book file (step S703), and displays a UI (User Interface) window in accordance with the structure, attribute, and contents of the book file. Fig. 10 shows an example of the UI window. The UI window 1100 has a tree portion 1101 representing a book structure, and a preview portion 1102 displaying a state to be printed. The tree portion 1101 displays chapters included in the book and pages included in each chapter by a tree structure as shown in Fig. 3A. Pages displayed at the tree portion 1101 are original pages. The preview portion 1102 displays reduced print page contents. The display order reflects the book structure.

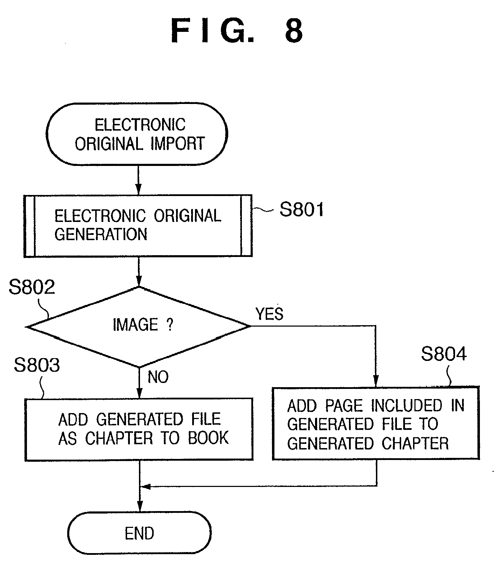

Application data converted into an electronic original file by the electronic original writer can be added as a new chapter to the open book file. This function is called an electronic original import function. An electronic original is imported to the book file newly created by the procedures of Fig. 7, thereby giving an entity to the book file. This function is activated by drag-and-drop operation of application data to the window of Fig. 10. Fig. 8 shows electronic original import procedures.

An application program which has generated designated application data is activated. The electronic original writer 102 is designated as a device driver, and prints out application data. The electronic original writer 102 converts drawing data input from the application via the OS into electronic original data (step S801). After conversion, the bookbinding application 104 checks whether the converted data is image data (step S802). This determination can be achieved based on the file extension of application data under the Windows^{®} OS. For example, an extension "bmp" represents Windows bitmap data; "jpg", jpeg-compressed image data; and "tiff", tiff-format image data. If YES in step S802, processing in S801 can be skipped because an electronic original file can be directlygenerated from image data without activating an application in S801.

If NO in step S802, the bookbinding application 104 adds the electronic original file generated in step S801 as a new chapter to the book of a currently open book file (step S803) . As for the chapter attribute, an attribute common to a book attribute is set to a book attribute value, and a different attribute is set to a default value prepared in advance.

If YES in step S802, no new chapter is added in principle, and each original page contained in the electronic original file generated in step S801 is added to a designated chapter (step S804) . For a file in which a book file is newly created, a new chapter is created, and each page of the electronic original file is added as a page belonging to the chapter. As for the page attribute, an attribute common to an upper layer attribute is given the attribute value of the upper layer attribute, and an attribute which is defined in application data and inherited to the electronic original file is given a value defined in the application data. For example, when N-up designation is defined in application data, the page inherits this attribute value. In this way, a new book file is created, or a new chapter is added.

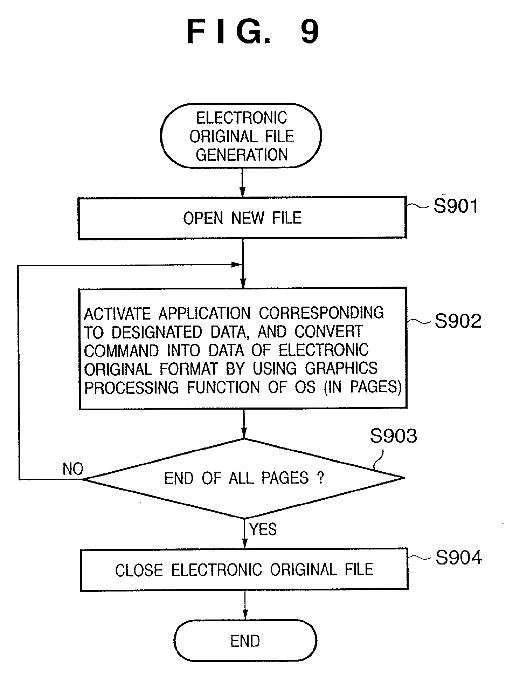

Fig. 9 is a flow chart showing procedures of generating an electronic original file by the electronic original writer 102 in step S801 of Fig. 8. A new electronic original file is created and opened (step S901) . An application corresponding to designated application data is activated. The electronic original writer is set as a device driver to transmit an output command to the output module of the OS. The output module converts the received output command into data of the electronic original format by the electronic original writer, and outputs the converted data (step S902). The output destination is the electronic original file opened in step S901. Whether all designated data have been converted is checked (step S903), and if YES in step S903, the electronic original file is closed (step S904). The electronic original file generated by the electronic original writer 102 is a file containing original page data entities shown in Fig. 3B.

### <Editing of Book File>

As described above, a book file can be created from application data. The generated book file allows editing a chapter and page as follows.
(1) New document
(2) Delete
(3) Copy
(4) Cut
(5) Paste
(6) Move
(7) Change chapter name
(8) Reassign page number/name
(9) Insert cover
(10) Insert slip sheet
(11) Insert index sheet
(12) Page layout of each original page

In addition, an operation of canceling executed editing operation, and an operation of restoring canceled operation can be performed. These editing functions enable editing operations such as consolidation of a plurality of book files, rearrangement of chapters and pages within a book file, delete of chapters and pages within a book file, layout change of an original page, and insertion of a slip sheet and index sheet. By these operations, operation results are reflected in attributes shown in Figs. 4A to 5 or on a book file structure. For example, a blank page is inserted into a designated portion by an operation of newly adding a blank page. The blank page is processed as an original page. If the layout of an original page is changed, the change contents are reflected in attributes suchastheprintingmethod, N-upprinting, front/backcover, index sheet, slip sheet, and chaptering.

### <Output of Book File>

The ultimate goal of a book file created and edited in the above manner is to print it out. The user selects a file menu from the UI window 1100 of the bookbinding application shown in Fig. 10, and selects printing from this menu. The book file is then printed out from a designated output device. At this time, the bookbinding application 104 creates a job ticket from a currently open book file, and transfers the job ticket to the electronic original despooler 105. The electronic original despooler 105 converts the job ticket into an OS output command, e.g., a Windows^{®} GDI command, and transmits the command to an output module, e.g., GDI. The output module generates a command complying with a device by a designated printer driver 106, and transmits the command to the device.

The job ticket is data with a structure whose minimum unit is an original page. The structure of the job ticket defines the layout of an original page on paper. One job ticket is issued for one job. A document node is set at the top of the structure, and defines the attribute of the whole document such as double-sided printing/single-sided printing. A paper node belongs to the document node, and contains attributes such as the identifier of paper for use and designation of a feed port in the printer. A sheet node to be printed on the paper belongs to each paper node. One sheet corresponds to one paper sheet. A print page (physical page) belongs to each sheet. One physical page belongs to one sheet for single-sided printing, and two physical pages belong to one sheet for double-sided printing. An original page to be laid out on a physical page belongs to the physical page. The physical page attribute contains an original page layout.

The electronic original despooler 105 converts the job ticket into an output command to the output module.

### <Another System Configuration>

The document processing system of the first embodiment has generally been described. This system is of stand-alone type. A server-client system as an extension of the stand-alone system also creates and edits a book file by almost the same arrangement and procedures. A book file and print processing are managed by the server.

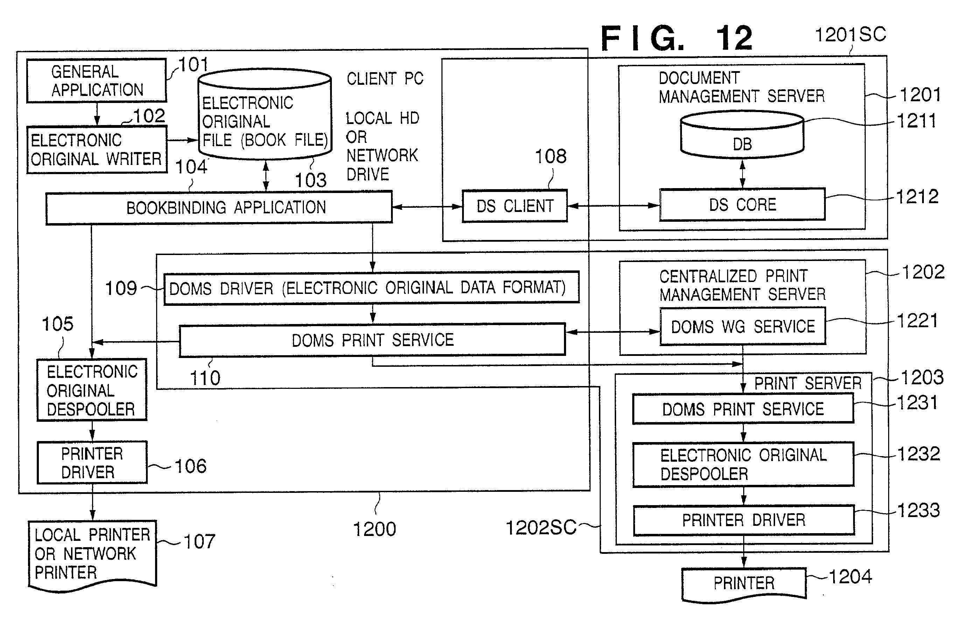

Fig. 12 is a block diagram showing the arrangement of a server-client document processing system. The client document processing system is constituted by adding to the stand-alone system a DOMS (Document Output Management Service) driver 109 serving as a client module, a DOMS print service module 110, and a DS (Document Service) client module 108. A client document processing system 1200 is connected to a document management server 1201, centralized print management server 1202, and print server 1203. These servers are generally connected to the client document processing system via a network. When the servers also function as clients, they are connected by interprocess communication which simulates communication between networks. The document management server 1201 and centralized print management server 1202 are connected to the client in Fig. 12, but only either one may exist on the network. If the connected server is the document management server, a document management server-client system 1201SC including a client module is added to the stand-alone document management system. If the connected server is the centralizedprintmanagement server 1202, aprintmanagement server-client system 1202SC including a client module is added.

The document management server 1201 stores a book file created and edited by the bookbinding application 104. To manage a book file by the document management server 1201, the book file is saved in a database 1211 of the document management server 1201 instead of or in addition to the local HD of a client PC. Save and read of a book file between the bookbinding application 104 and the document management server 1201 are done via the DS client module 108 and a DS core 1212.

The centralized print management server 1202 manages printing of a book file stored in the client document processing system 1200 or document management server 1201. A print request from the client is transmitted to a DOMS WG server module 1221 of the centralized print management server 1202 via the DOMS driver 109 and DOMS print service module 110. To print a book f ile by the printer of the client, the centralized print management server 1202 transfers electronic original data to the electronic original despooler 105 via the DOMS print service module 110 of the client. To print a book file by the print server 1203, the centralized print management server 1202 transmits electronic original data to a DOMS print service module 1231 of the print server 1203. For example, the centralizedprint management server executes security check on the qualification of a user who has issued a print request for a saved book file, or saves the print processing log. In this fashion, the document processing system can be implemented as both a stand-alone system and client-server system.

### <Printer Arrangement>

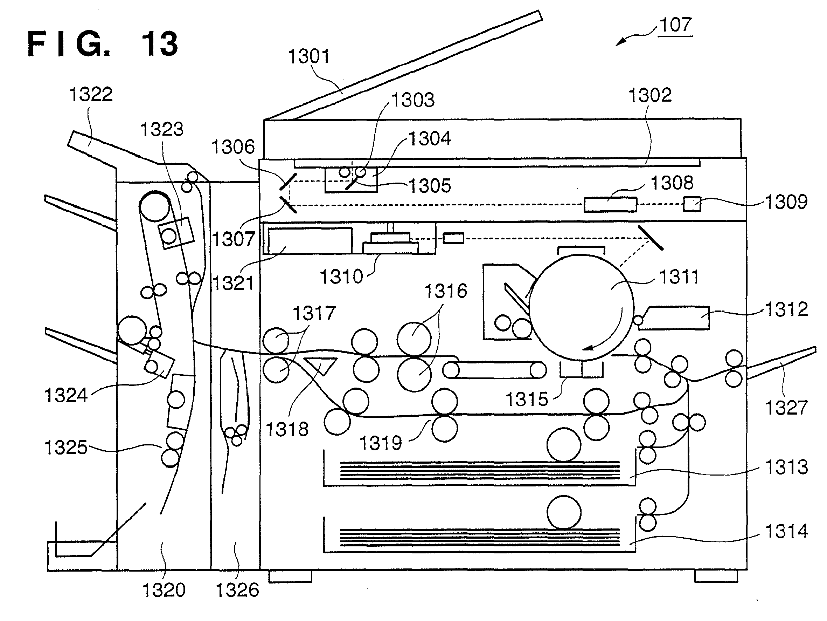

Fig. 13 is a sectional view showing a copying machine equipped with a finisher as an example of the printer 107. The copying machine 107 comprises a reader section for processing an original, and can be exploited as a scanner or copying machine. In addition, the copying machine 107 can be utilized as a printer by inputting a print job from a connected computer.

In Fig. 13, an original feeder 1301 sequentially feeds original pages one by one from the first page onto platen glass 1302. After the end of original read operation, an original page on the platen glass 1302 is discharged. When an original page is conveyed onto the platen glass 1302, a lamp 1303 is turned on, and a scanner unit 1304 is moved to scan the original page. Light reflected by the original page is guided to a CCD image sensor (to be referred to as a CCD hereinafter) 1309 by mirrors 1305, 1306, and 1307 and a lens 1308. The scanned original image is read by the CCD 1309. When the copying machine 107 is used as a printer, this reader section can be omitted.

A laser driver 1321 drives a laser-emitting unit 1310, and causes the laser-emitting unit 1310 to emit a laser beam corresponding to output image data. The output image data is input from a host computer when the copying machine 107 is used as a printer. The laser beam irradiates and scans a pre-charged photosensitive drum 1311, and a latent image corresponding to the laser beam is formed on the photosensitive drum 1311. A developer is deposited on the latent image portion on the photosensitive drum 1311 by a developing unit 1312. For a color machine, the developing unit 1312 comprises developingunits for four colors : yellow, magenta, cyan, and black. At the timing synchronized with the start of laser beam irradiation, a print sheet is fed from any one of cassettes 1313 and 1314 and a manual feed stage 1327, and conveyed to a transfer unit 1315. The developer deposited on the photosensitive drum 1311 is transferred onto the print sheet. The print sheet bearing the developer is conveyed to a fixing unit 1316 where the developer is fixed onto the print sheet by the heat and pressure of the fixing unit 1316, forming an image on the print sheet.

The print sheet having passed through the fixing unit 1316 to complete image formation is discharged by discharge rollers 1317. When double-sidedprinting is set and an image is formed on only the first surface, the print sheet is conveyed to the discharge rollers 1317, then the rotational direction of the discharge rollers 1317 is reversed, and the print sheet is guided to a refeed convey path 1319 by a flapper 1318. The print sheet guided to the refeed convey path 1319 is fed to the transfer unit 1315 at the above-mentioned timing, and an image is formed on the second surface.

When a Z-folding unit 1326 is attached to the main body, a print sheet discharged from the copying machine main body is conveyed to the Z-folding unit 1326, and Z-folded in accordance with operation from the operation unit or print settings.

When a finisher 1320 is attached, print sheets discharged from the copying machine main body are bundled and sorted, punched by a puncher 1323 in accordance with print settings, or stapled by a stapler 1324. Print sheets bundled by a saddle stitcher 1325 are stitched at the center (saddle stitch), folded at the center, and bound. An inserter 1322 can feed a paper sheet bearing any image printed in advance as a document cover or slip sheet, and insert the sheet as a designated page of a document to be discharged. A paper sheet inserted by the inserter 1322 does not pass through the print sheet convey path of the printer section, and is conveyed without any damage.

### <Variable Printing Procedures>

Variable printing is executed when an instruction of performing variable printing is set in the following way and a print instruction is issued. At this time, print data in which variable data is inserted in a variable field for each record is generated every book, and print data of each book is generated for all records. Along with print data generation, control procedures according to the present invention properly determine, in accordance with print settings, whether to generate one print job for print data of each book generated for one record or to generate one print job for print data of books generated for all records.

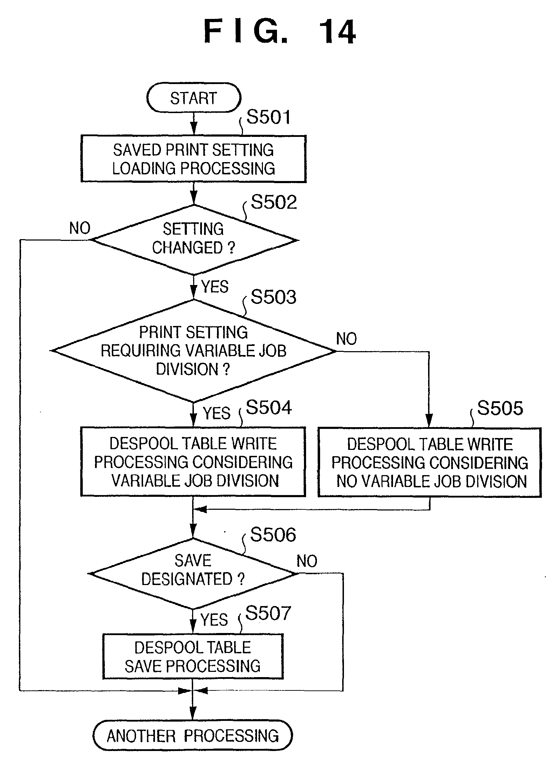

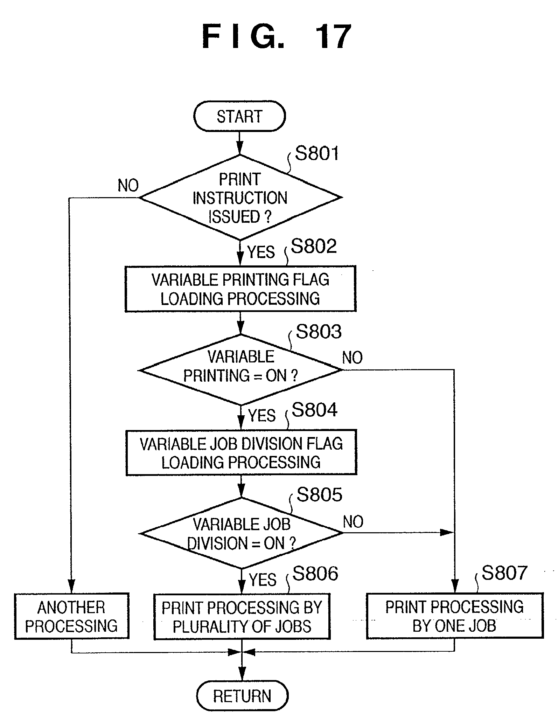

Figs. 14 to 16 are flow charts schematically showing processing procedures of variable printing by the bookbinding application 104. Fig. 17 is a flow chart schematically showing processing procedures of variable printing by the electronic original despooler 105. The processing flows of the bookbinding application 104 and electronic original despooler 105 will be explained with reference to Figs. 14 to 17.

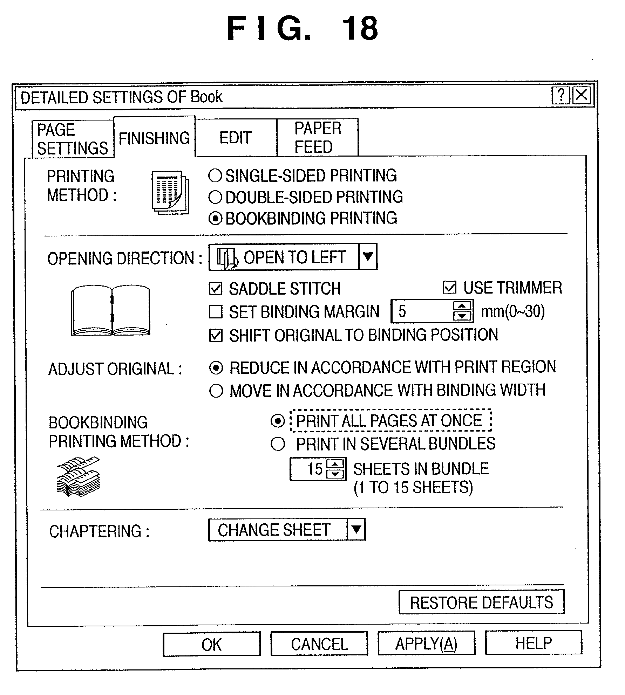

Fig. 14 schematically shows the save flow of the bookbinding application 104 after print settings are changed. Fig. 10 shows the print preview window of the bookbinding application 104. The file menu is selected on the print preview window, "print" is selected, and then a designated output device prints out data. The settings of book, chapter, original page attributes can also be changed by menu selection. Fig. 18 is a view showing an example of a user interface window which prompts a change in print settings for the book attribute.

The electronic original file 103 is loaded into the bookbinding application 104. This is a preliminary step of print setting, and the loaded electronic original file is subjected to print setting.

In Fig. 14, processing 501 of loading saved print settings is performed upon loading the electronic original file 103. In this processing, print setting data are loaded from the electronic original file 103, and print settings loaded into the mapping area of the memory that is called a despool table are mapped. The print setting data are contained in the book attribute, chapter attribute, original page attribute shown in Figs. 3A and 3B.

Processing 502 of determining whether settings have been changed is performed. In this processing, for example, whether settings have been changed on the interface (book attribute user interface) of the bookbinding application 104 shown in Fig. 18 is determined.

If YES in step S502, processing 503 of determining whether print settings require variable job division is performed. A setting requiring variable job division exists in a combination with variable (plurality of records) printing depending on print settings such as stapling or feed from the cover inserter. In this processing, whether a setting requiring variable job division has been done during setting change is determined.

If YES in step S503, despool table write processing 504 considering variable job division is performed.

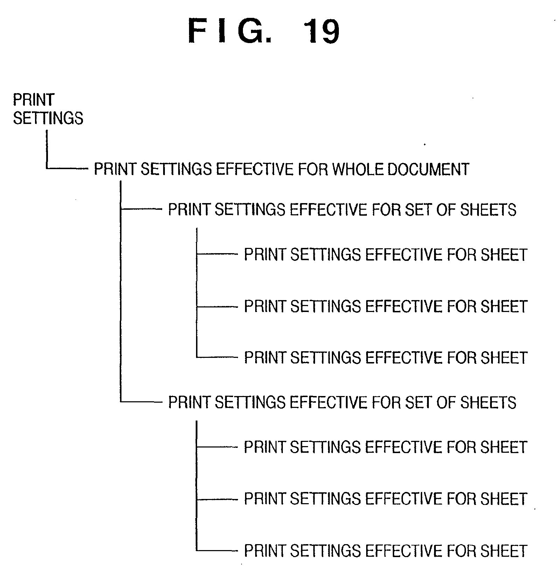

The despool table is a data table to be looked up when an electronic original file is despooled to generate a print job. The despool table has a structure as shown in Fig. 19. That is, print settings contain print setting items (attributes) effective for the whole document. As a lower layer, the print setting items contain print setting items (attributes) effective for a set of sheets designated by the user or the like. As a lower layer, the print setting items effective for a set of sheets contain print setting items (attributes) effective for each sheet. A sheet is a unit corresponding to one print medium, and a set of sheets is a unit which is one sheet or a bundle of sheets. The whole document means the entire book file.

Examples of items contained in print settings effective for the whole document are a variable printing item (variable printing flag) for determining whether to perform variable printing, and a variable job division item (variable job division flag) which is a feature of the present invention. Even if print data contains a variable field, the variable field is kept blank without embedding variable data (data from a database file) in this field unless the variable printing item is set ON. The variable job division item is a flag marked in step S504. If this flag is marked in generating a print job, one job is generated for each record of variable printing; if not marked, one job is generated for all records of variable printing.

Despool table write processing considering variable job division in step S504 is to mark the variable job division item represented by a flag or the like in variable (plurality of records) printing. If job division is determined to be unnecessary in processing 503 of determining whether print settings require job division, despool table write processing 505 considering no variable job division is executed. In step S505, the variable job division item is not marked. The mark of the variable job division item means that a job must be divided every record upon designation of variable printing. If variable printing is not performed, the variable division item is not looked up.

If settings are changed, processing 506 of determining whether save of changed settings has been designated is performed. If YES in step S506, despool table save processing 507 is executed. In this processing, print setting contents mapped in the despool table in the memory are rewritten in the electronic original file 103. As a result, setting contents changed by the bookbinding application 104 are reflected in the electronic original file 103.

In the procedures of Fig. 14, whether variable job division is necessary is determined only when settings are changed. It is also possible to check print settings loaded in step S501 upon opening an electronic original file even when settings are not changed, and to determine whether variable job division is necessary. In the procedures of Fig. 14, the mark of the job division item representing the necessity of variable job division must be saved as one of print settings. If the necessity of variable job division is determined every time an electronic original file is loaded, the mark of the job division item need not be saved. In any case, if the electronic original despooler 105 despools electronic original data, the necessity of variable j ob division is determined based on print settings contained in attributes such as the book attribute, chapter attribute, and page attribute shown in Fig. 3 before generation of a print job, and the determination result is output to the despool table.

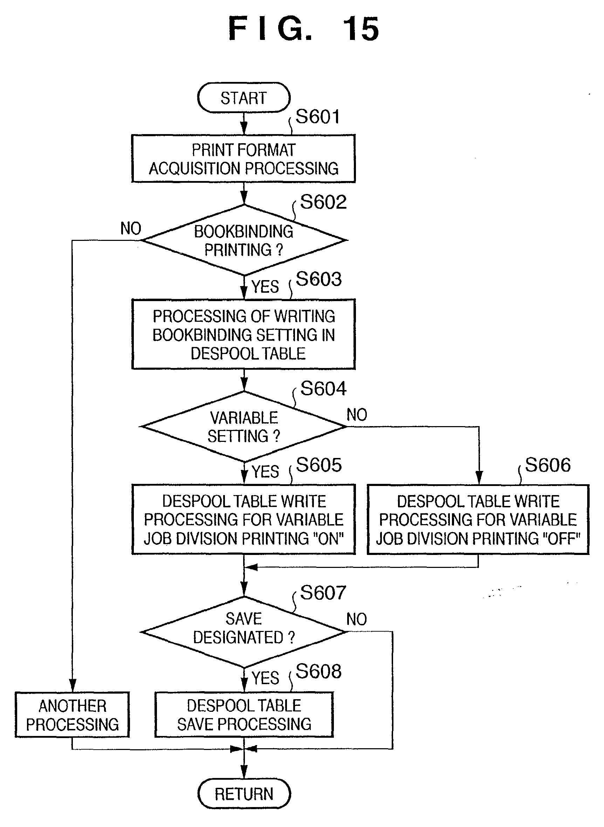

More detailed save processing when "bookbinding printing" is selected in the "printing method" column on the "finishing" setting window of the user interface window in Fig. 18 will be explained with reference to the flow chart of Fig. 15.

When loading the electronic original file 103, the bookbinding application 104 performs print format acquisition processing in step S601. In this processing, print setting data is loaded from the electronic original file 103, and the print format setting is mapped into the mapping area of the memory that is called a despool table. In step S602, processing 602 of determining whether the print format represents bookbinding printing and saddle stitch has been designated is performed. In this processing, whether the setting has been changed to the bookbinding printing setting on the interface of the bookbinding application 104 in Fig. 18 and saddle stitch has been designated is determined.

In Fig. 18, bookbinding printing is set by selecting a radio button "bookbinding setting" in the printing method column. If bookbinding printing is selected, detailed selectable items are displayed in columns "opening direction", "adjust original", "bookbinding printing method", and "chaptering" on the user interface window. In Fig. 18, e.g., an item "saddle stitch" is checked. This item causes the printer to perform so-called saddle stitch of stapling paper sheets at the center in bookbinding printing.

If it is determined in step S602 that the print format has been changed to bookbinding printing (or bookbinding printing is set) and saddle stitch has been designated, bookbinding setting despool table write processing 603 is executed. In this processing, the order of pages is changed to a printing order suitable for bookbinding printing. In addition, a flag corresponding to an item checked in print settings, e.g., a saddle stitch flag corresponding to saddle stitch in the example of Fig. 18 is set. The saddle stitch flag is set for a set of sheets in the despool table.

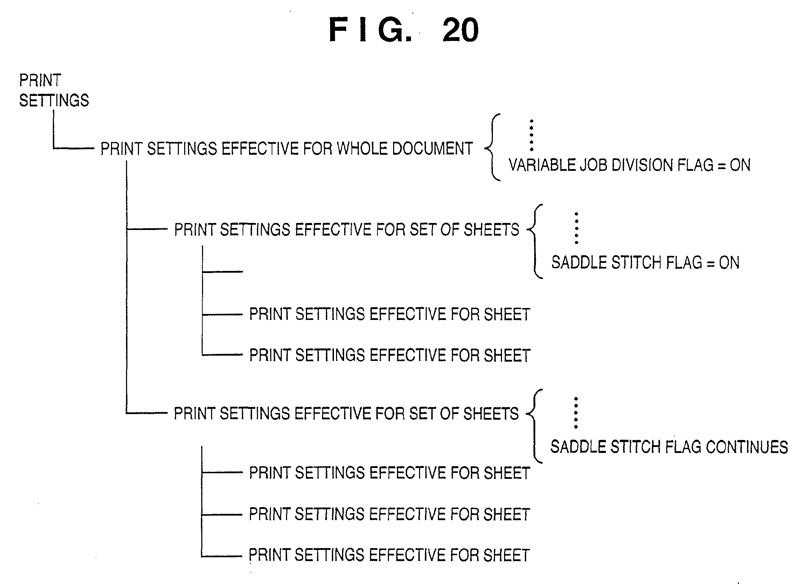

After that, processing 604 of determining whether variable setting has been done is executed. In this processing, whether a variable printing field has been set in an electronic original file by an application which has generated document data is determined. If YES in step S604, variable job division printing ON despool table write processing 605 is done. By these processes, as shown in Fig. 20, a variable job division flag is set as one of print settings effective for the whole document, and a flag representing to perform saddle stitch for a set of sheets is set.

Processing 607 of determining whether save has been designated is executed. If YES in step S607, despool table save processing 608 is executed. In this processing, print setting contents mapped in the despool table in the memory are written in the electronic original file 103. Accordingly, bookbinding settings are reflected in the electronic original file 103.

In the example of Fig. 15, when "bookbindingprinting" is selected as a printing method, "print setting requiring variable job division" in step S503 of Fig. 14 is determined. This is because original pages must be distributed to print pages so as to lay out bounded original pages in the page order in bookbinding printing. Original pages cannot be bound into a book independent for each record unless a job is independent for each record in variable printing and bookbinding printing.

However, this is merely an example. When cover insertion is designated, a cover is inserted at the start of one print job, as described above. Also in this case, even if bookbinding printing is not designated, variable job division must be executed for variable printing under restrictions on a printer device.

In the use of a printer having a function of inserting a tab sheet (index sheet) between printed sheets, insertion of a tab sheet at the start of a chapter can be designated in the "book" attribute or the like. In variable printing with an inserted tab sheet, sheets are grouped for each record, and a tab sheet insertion flag is set in print settings effective for the whole document. If the number of tab sheets to be inserted is equal to or smaller than a predetermined upper limit value (e.g., a device limit of 20 sheets), a tab sheet is inserted at the start of each record. If the number of tab sheets to be inserted exceeds the upper limit value, no tab sheet can be inserted for a record after the excess of the upper limit value. For this reason, when the tab sheet insertion option is selected, variable job division is designated on the condition that variable printing is designated. Variable job division is therefore executed in designation of tab sheet insertion and designation of variable printing.

If all records are printed as one job in designation of stapling, a plurality of records are stapled at once. This also applies to stapling of all records or stapling of a predetermined number of sheets. To prevent this, variable job division is designated in designation of stapling on the assumption that variable printing is designated. Thus, variable job division is performed in designation of stapling and designation of variable printing.

In this manner, a print job is divided for each record when a print setting effective for the whole document data is selected and the print setting cannot be divided for each document data in which each of records is embedded. For example, for stapling, sheets are stapled for a predetermined number of sheets, and cannot be grouped into documents. For bookbinding printing, original pages are laid out in a book creatable by a plurality of records.

Also, a print job is divided for each record upon selecting a print setting which is effective for the whole document data but cannot be applied to all records. Details of this will be explained in the next embodiment, and a print job is divided for "punch hole", insertion of "back cover", or the like. For the punch hole setting, the upper limit number of sheets to be punched is limited under functional restrictions on a printing apparatus. It is predicted that a document generated for each record may be punched but all documents may not be punched at once. Some printing apparatuses may only insert a cover at the start of one print job.

### <Print Processing Procedures>

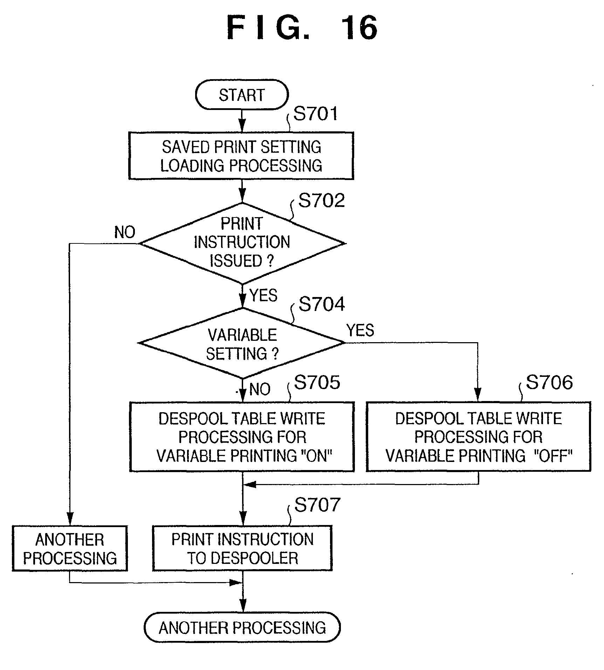

The outline of print processing will be explained with reference to Fig. 16.

Processing 701 of loading saved print settings is performed. Inthisprocessing, thebookbindingapplication 104 loads the electronic original file 103, and maps print settings in the despool table, as described above.

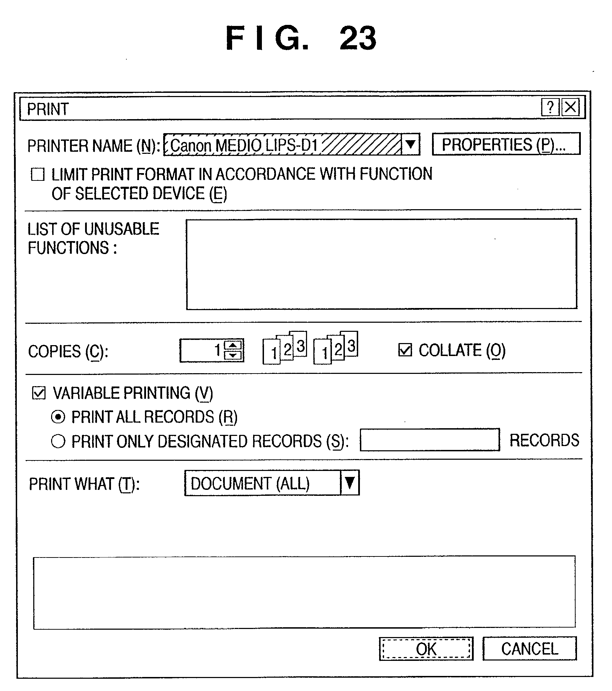

Processing 702 of determining whether a print instruction has been issued is then performed. In step S702, whether the user has issued a print instruction from the user interface of the bookbinding application 104 is determined. If YES in step S702, a user interface window (Fig. 23) for printing is displayed. Fig. 23 shows a user interface window displayed when "print" is selected from the "file" menu on the user interface window of Fig. 10.

If YES in step S702, processing 704 of determining whether to perform variable printing is performed. In this processing, whether an item "variable printing" has been checked on the user interface window of the bookbinding application 104 shown in Fig. 23 is determined.

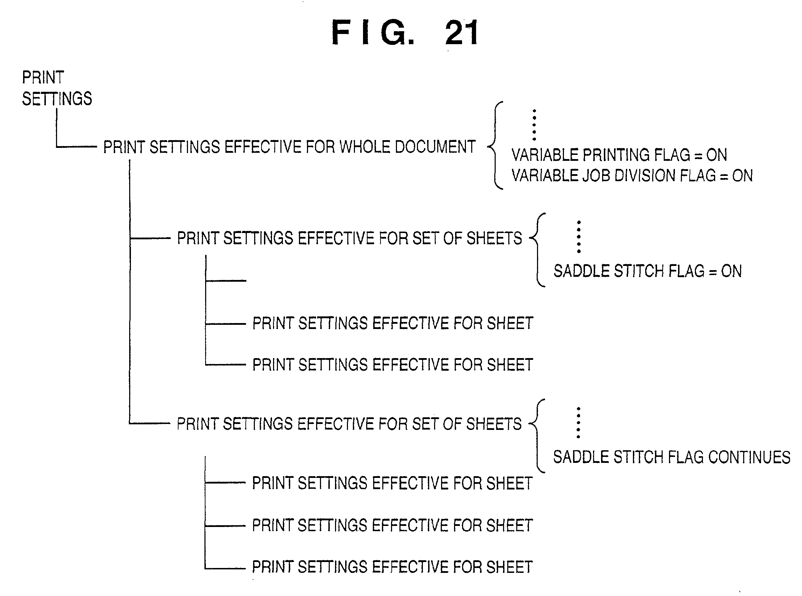

If YES in step S704, despool table write processing 705 for performing variable printing is executed. More specifically, a variable printing flag in the despool table is set ON, as shown in Fig. 21. If no variable printing instruction is determined to be issued, despool table write processing 706 for performing no variable printing is executed. In this processing, the variable printing flag in the despool table is set OFF. The print processing method in the electronic original despooler 105 is determined based on these flags. Print processing 707 for the electronic original despooler 105 is performed to print data.

The outline of processing in the electronic original despooler 105 will be described with reference to Fig. 17.

Processing 801 of determining whether a print instruction has been issued in step S707 of Fig. 16 is done. If the bookbinding application 104 has issued a print instruction during the above-mentioned flow, variable printing flag loading processing 802 is performed. In this processing, the flag in the despool table that is set by the bookbinding application 104 in accordance with an instruction from the user interface of Fig. 15 is loaded. In response to loading, processing 803 of determining whether variable printing is ON is done. If YES in step S803, variable job division flag loading processing 804 is executed. In this processing, the variable division flag written in the despool table by the set function of the bookbinding application 104 is loaded.

If variable job division printing, i.e., "variable printing" and "variable job division" are determined by processing 805 of determining whether variable j ob division has been set, a print job is generated for each record in the variable field. Print processing 806 by a plurality of generated print jobs is performed. The number of print jobs is one when data are spooled as an electronic original file by the bookbinding application. In this processing, one original print job is divided into a plurality of print jobs. This allows realizing print setting contents even in variable printing.

If NO in step S805, print processing 807 by one print job for all records is executed. A plurality of records designated as variable printing objects are printed by one job.

In this manner, the despooler looks up the despool table set by the bookbinding application, and determines whether to perform print processing as a plurality of print jobs or a single print job. A series of processing flows by the bookbinding application 104 and despooler 105 enable selecting an optimum printing method corresponding to print settings. The printing method is determined in the print processing system without any user's explicit designation. Reduction in labor, prevention of resource waste, and shortening of the processing time can be realized.

In the first embodiment, when variable printing is done for a plurality of records, whether independent print jobs have been generated for respective records or a single print job has been generated for all the records can be confirmed by a print job monitoring function provided by, e.g., a printer driver installed in the document processing apparatus 100. A print job in progress, a print job in a standby state, and a print job in an interrupted state or during termination processing are displayed as a list in correspondence with their names and states by the print job monitoring function.

### [Other Embodiment]

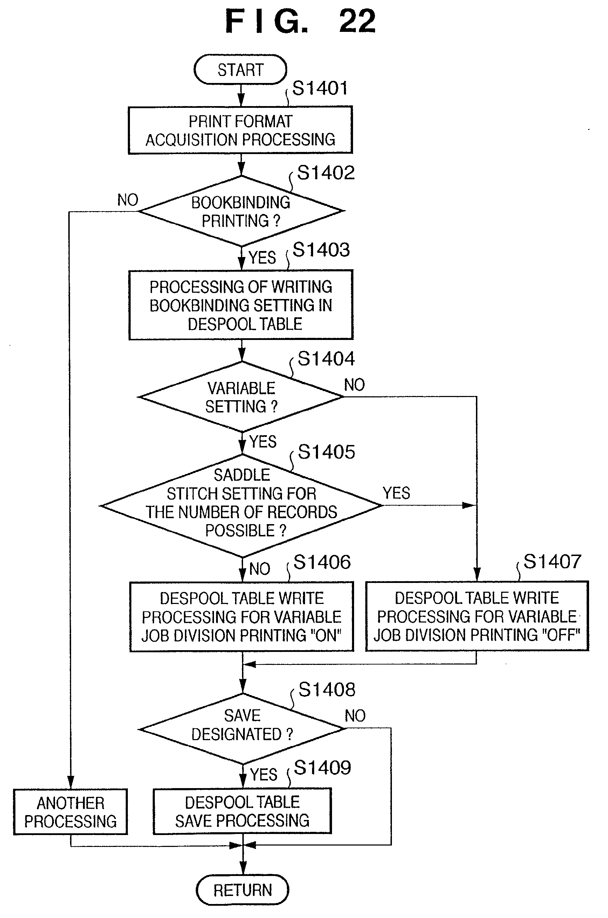

An example of distributing a plurality of records subjected to variable printing to a plurality of jobs or one job depending on the device ability will be described as other embodiment in addition to the setting contents of an application. This embodiment will be explained with reference to Fig. 22.

Fig. 22 is a schematic flow chart when bookbinding printing is set by a bookbinding application 104, the saddle stitch ability of a device is determined, and the variable job division flag is set and saved in accordance with the saddle stitch ability.

Print format acquisition processing 1401 is performed when the bookbinding application 104 loads an electronic original file 103. In this processing, print setting data is loaded from the electronic original file 103, and the print format setting is mapped into the mapping area of the memory that is called a despool table. Processing 1402 of determining whether bookbinding printing has been set is done. In step S1402, whether the setting has been changed to the bookbinding printing setting on the interface of the bookbinding application 104 shown in Fig. 18 is determined. If YES in step S1402, bookbinding setting despool table write processing 1403 is executed. In this processing, the order of pages is changed to a printing order suitable for bookbinding printing, and the saddle stitch flag is set.

In step S1404, processing of determining whether variable setting has been done is executed. In this processing, whether a variable printing field has been set in advance in the application is determined. If YES in step S1404, processing of determining whether saddle stitch can be set for the number of records in a device is executed in step S1405. In this processing, whether a printer for use can saddle-stitch records by one job is determined. If the device can do this, bookbinding can be set, and a plurality of records can be printed by one job. In the prior art, only one stapling designation can be done for one job due to the device limit. Recently, devices are being equipped with a job binding function of binding a plurality of jobs into one. Thus, recent devices can bind up to 16 jobs into one job by the job binding function, but cannot bind more than 16 jobs into one due to the job binder limit. For this reason, a print job can be generated by one job using the job binding function as long as stapling designation targets 16 records or less, or the product of the number of records and the sub-set stapling count is 16 or less. The device interprets the contents of a bound job, if a plurality of jobs are bound, internally divides the bound job into a plurality of jobs, and processes the respective jobs. For example, one job as a combination of 16 jobs is internally divided into 16 jobs and then processed. Thus, each job can be stapled.

Note that the job binding ability changes depending on the device, and some latest printers have a binder limit of 400. In step S1405, the bookbinding application acquires the job binding limit of an output destination device. In cover insertion by an inserter, tab sheet insertion, or stapling designation (including saddle stitch designation), the acquired job binding limit and the number of records to be printed are compared. If the number of records is larger, it is determined that variable job division should be performed. In sub-set stapling capable of designating stapling for each chapter, the product of the number of records to be printed and the number of groups in each of which a part subjected to sub-set stapling and the remaining part are separated is compared with the job binding limit. If the job binding limit is smaller, it is determined that variable job division should be performed.

If it is determined that the device cannot realize such setting, variable job division printing ON despool table write processing 1406 is done. By these processes, the variable job division flag is set in a group representing a document, and the saddle stitch flag is set in a group representing paper, as shown in Fig. 20.

Processing 1408 of determining whether save has been designated is executed. If YES in step S1408, despool table save processing 1409 is executed. In this processing, print setting contents mapped in the despool table of the memory are written in the electronic original file 103. As a result, bookbinding settings are reflected in the electronic original file 103. Printout procedures are the same as those shown in Figs. 16 and 17.

In this fashion, whether to print a plurality of records in the variable field by a plurality of jobs or one job is determined depending on the device ability.

The ability of the device, i.e., printer for use is grasped by a printer driver 106 shown in Fig. 1. The printer driver 106 is software for realizing control procedures corresponding to a printer 107. When a specific printer is adopted as the printer 107 and a corresponding printer driver 106 is installed in a print control system 100, data representing the basic ability of the device can be introduced into the print control system 100 together with the printer driver. Information about a device such as a feeder or saddle stitcher which can be selectively added to the printer 107 can be acquired by the driver 106 by bidirectional communication with the printer 107. The additional ability of the printer can also be set by the user by user setting on a user interface window provided by the printer driver 106.

Note that processing 1405 of determining whether saddle stitch can be set for the number of records in a device is determined by the device ability acquired from the printer driver 106, as described above. This device ability is, e.g., the binder limit count, as described above.

To perform a plurality of stapling (saddle stitch) operations by one job, the job must be generated as a multi-binder j ob (job having a plurality of binder attributes in one job) in the command system of a print control protocol called CPCA (protocol unique to Canon). The binder limit count is a value representing the number of binder attributes which can be held in one job.

The binder limit count changes depending on the device. For example, the value = 16 means that 16 saddle stitch operations can be done by one job. In this case, up to 16 records can be saddle-stitched by one job.

In addition, the PDL characteristic of an output device must be taken into consideration.

For example, according to LIPS as a page description language proposed by Canon, color and monochrome modes are switched by a LIPS command, i.e., at the page description language level. According to PCL as a page description language proposed by Hewlett-Packard, switching cannot be designated at the page description language level, and is performed by the above-mentioned CPCA as an alternate. Switching by CPCA, like PCL, uses CPCA attribute designation, similar to saddle stitch, and the job binding limit is imposed.

The color/monochrome mode originally belongs to a CPCA document. At present, the mode is acquired from the driver as a binder limit count including the maximum number of documents held in one job. Switching between the color and monochrome modes is also determined by the binder limit count.

For example, when the binder limit count is 16, as described above, the output device adopts PCL, and one color/monochrome switching operation is set in print settings, records are classified into two, color and monochrome parts. Up to eight records can be saddle-stitched by one job. When three color/monochrome switching operations are set in print settings, records are classified into four, color and monochrome parts. Up to four records can be subjected to stapling, saddle stitch, cover insertion, tab sheet insertion, and the like by one job.

Note that the device ability as a criterion of determining variable job division is not limited to stapling. The above-mentioned upper limit number of index sheets to be inserted or the punching ability can also be adopted as the criterion.

As described above, the despooler looks up the despool table set by the bookbinding application, and determines whether to perform print processing as a plurality of print jobs or a single print job. A series of processing flows by the bookbinding application 104 and despooler 105 enable selecting an optimum printing method corresponding to print settings and the device ability. The printing method is determined in the print processing system without any user's explicit designation. Reduction in labor, prevention of resource waste, and shortening of the processing time can be realized.

The present invention may be applied to a system constituted by a plurality of devices (e.g., a host computer, interface device, reader, and printer) or an apparatus (e.g., a copying machine, printer, or facsimile apparatus) formed from a single device. The object of the present invention is also achieved when a storage medium which stores software program codes for realizing the functions of the above-described embodiments is supplied to a system or apparatus, and the computer (or the CPU or MPU) of the system or apparatus reads out and executes the program codes stored in the storage medium.

In this case, the program codes read out from the storage medium realize the functions of the above-described embodiments, and the storage medium which stores the program codes constitutes the present invention.

The storage medium for supplying the program codes includes a floppy^{®} disk, hard disk, optical disk, magnetooptical disk, CD-ROM, CD-R, magnetic tape, nonvolatile memory card, and ROM.

The functions of the above-described embodiments are realized when the computer executes the readout program codes. Also, the functions of the above-described embodiments are realized when an OS (Operating System) running on the computer performs part or all of actual processing on the basis of the instructions of the program codes.

The functions of the above-described embodiments are also realized when the program codes read out from the storage medium are written in the memory of a function expansion board inserted into the computer or the memory of a function expansion unit connected to the computer, and the CPU of the function expansion board or function expansion unit performs part or all of actual processing on the basis of the instructions of the program codes.

As has been described above, according to the present invention, a print job is created by an optimum method on the basis of print settings, and a user-desired printout can be reliably output. Reduction in user's labor, prevention of resource waste, and shortening of the processing time can be realized.

A plurality of independent print jobs are determined to be issued for a plurality of records when, of print settings accessory to document data, a print setting which is effective for the whole document data and cannot be changed between document data containing respective records is selected as a print setting, or when a print setting which is effective for the whole document data and cannot be applied to all records is selected. A document can therefore be output in a user-desired format.

A plurality of independent print jobs are determined to be issued for a plurality of records when, of print settings accessory to document data, bookbinding setting is selected as a print setting, when stapling is selected, when index sheet insertion is selected and the number of sheets to be inserted exceeds an upper limit processible by the printing apparatus, or when cover insertion is selected. Accordingly, an optimummethod can be automatically selected in accordance with the function of the document processing apparatus or the function of the printing apparatus.

Moreover, the upper limit processible by the printing apparatus is acquired as an ability unique to the printing apparatus, and the PDL characteristic is also taken into consideration. An optimum method in printing document data using the printing apparatus can be automatically selected.

When a region for embedding a record is designated in document data and printing of document data with a designated record embedded in the designated region is designated, variable printing is determined to be performed. The user need not determine whether the document contains variable printing designation, reducing the labor.

As many apparently widely different embodiments of the present invention can be made without departing from the spirit and scope thereof, it is to be understood that the invention is not limited to the specific embodiments thereof except as defined in the appended claims.

## Claims

1. A document processing apparatus adapted to be connected to a printing apparatus (107) and capable of performing variable printing in which designated variable data for each of a plurality of records is embedded in a designated region of printing document data to generate print data for the plurality of records for use by the printing apparatus to print the plurality of records, the apparatus (100) comprising:
setting means (S501, S502; Fig. 18) for setting print attributes for the document data;
determination means (S503; S602-S604; S1402-S1405) configured to determine, when such variable printing is to be performed and an attribute to feed a sheet of paper from an inserter is included in the print attributes, to generate a plurality of print jobs for the plurality of records, and also configured to determine, when such variable printing is to be performed and no such attribute to feed a sheet of paper from the inserter is included in the print attributes, to generate a single print job for the plurality of records; and
issuing means (105) for issuing such a plurality of print jobs (S806) or such a single print job (S807) to the connected printing apparatus on the basis of the determination.

2. The document processing apparatus according to claim 1, wherein the determination means are configured to generate the plurality of print jobs when index sheet is selected and the number of sheets to be inserted exceeds an upper limit processible by the printing apparatus, or when cover insertion is selected.

3. A document processing method capable of performing variable printing in which designated variable data for each of a plurality of records is embedded in a designated region of printing document data to generate print data for the plurality of records for use by a printing apparatus (107) to print the plurality of records, the apparatus comprising:
setting (S501, S502; Fig. 18) print attributes for the document data;
when such variable printing is to be performed and an attribute to feed a sheet of paper from an inserter (1322) is included in the print attributes, determining to generate a plurality of print jobs for the plurality of records, and, when such variable printing is to be performed and no such attribute to feed a sheet of paper from the inserter is included in the print attributes, determining to generate a single print job for the plurality of records; and
issuing such a plurality of print jobs (S806) or such a single print job (S807) to the printing apparatus on the basis of the determination.

4. The document processing method according to claim 3, comprising determining to generate the plurality of print jobs when index sheet is selected and the number of sheets to be inserted exceeds an upper limit processible by the printing apparatus, or when cover insertion is selected.

5. A document processing apparatus capable of issuing to a printing apparatus a print job of variable printing in which designated variable data is embedded in a designated region of printing document data, comprising:
setting means for setting print attributes for the document data;
determination means for, when variable printing is to be performed for a plurality of records, determining on the basis of the print attributes set by said setting means whether to issue a plurality of print jobs for the plurality of records or a single print j ob for the plurality of records; and
issuing means for issuing a plurality of print jobs or a single print job on the basis of determination.

6. The apparatus according to claim 5, **characterized in that** when, of the print attributes, a print setting which is effective for the whole document data and should be separately applied to the plurality of records is selected, said determination means determines to issue a plurality of independent print jobs for the plurality of records.

7. The apparatus according to claim 5, **characterized in that** when bookbinding setting and saddle stitch are selected as print settings, when stapling is selected, when index sheet insertion is selected and the number of sheets to be inserted exceeds an upper limit processible by the printing apparatus, or when cover insertion is selected, said determination means determines to issue a plurality of print jobs for the plurality of records.

8. The apparatus according to any one of claims 5 to 7, **characterized in that** when stapling of each record is selected as a print setting, said determination means determines whether the number of records exceeds a job binding limit count processible by the printing apparatus, when the number of records exceeds the job binding count, determines to issue a plurality of print jobs, and when the number of records does not exceed the job binding count, determines to issue a single print job for the plurality of records by using a job binding function.

9. A document processing method capable of issuing to a printing apparatus a print job of variable printing in which designated variable data is embedded in a designated region of printing document data, **characterized by** comprising:
a setting step of setting print attributes for the document data;
a determination step of, when variable printing is to be performed for a plurality of records, determining on the basis of the print attributes set in the setting step whether to issue a plurality of print jobs for the plurality of records or a single print j ob for the plurality of records; and
an issuing step of issuing a plurality of print jobs or a single print job on the basis of determination.

10. The method according to claim 9, **characterized in that** in the determination step, when, of the print attributes, a print setting which is effective for the whole document data and should be separately applied to the plurality of records is selected, a plurality of independent print jobs are determined to be issued for the plurality of records.

11. The method according to claim 9, **characterized in that** in the determination step, when bookbinding setting and saddle stitch are selected as print settings, when stapling is selected, when index sheet insertion is selected and the number of sheets to be inserted exceeds an upper limit processible by the printing apparatus, or when cover insertion is selected, a plurality of print jobs are determined to be issued for the plurality of records.

12. The method according to any one of claims 9 to 11, **characterized in that** in the determination step, when stapling of each record is selected as a print setting, whether the number of records exceeds a job binding limit count processible by the printing apparatus is determined, when the number of records exceeds the job binding count, a plurality of print jobs are determined to be issued, and when the number of records does not exceed the job binding count, a single print job is determined to be issued for the plurality of records by using a job binding function.

13. A program which, when executed by a computer, causes the computer to carry out the document processing method of any one of claims 3, 4, 9, 10, 11 and 12.
